# EUROPÄISCHE PATENTSCHRIFT

(11) **EP 0 779 919 B1**
(45) Veröffentlichungstag und Bekanntmachung des Hinweises auf die Patenterteilung: **29.03.2000**
(21) Anmeldenummer: 95944719.4
(22) Anmeldetag: 14.07.1995
(51) Int. Cl.: C12C 11/07, C12C 11/09

(54) **VERFAHREN ZUR KONTINUIERLICHEN HERSTELLUNG VON BIER**
PROCESS FOR THE CONTINUOUS PRODUCTION OF BEER
PROCEDE PERMETTANT DE PRODUIRE DE LA BIERE EN CONTINU

(30) Priorität: 31.08.1994 DE 4430905
(43) Veröffentlichungstag der Anmeldung: 25.06.1997
(73) Patentinhaber: Metallgesellschaft Aktiengesellschaft, 60325 Frankfurt am Main (DE)
(72) Erfinder: BODMER, Roland, D-61130 Nidderau (DE); BÖNSCH, Rudolf, D-55299 Nackenheim (DE); EICHELSBACHER, Michael, D-55130 Mainz (DE); MITSCHKE, Peter, D-63477 Maintal (DE); SEIFFERT, Thorsten, D-61267 Neu-Anspach (DE)
(86) Internationale Anmeldenummer: EP9502759
(87) Internationale Veröffentlichungsnummer: WO9606923

(56) Entgegenhaltungen:
- EP-A- 0 508 343
- DE-C- 4 244 595
- GB-A- 872 391
- GB-A- 1 032 556
- US-A- 4 915 959
- PROCEEDINGS OF THE EUROPEAN BREWERY CONVENTION CONGRESS , Nr. 23, 1991 LISBON, Seiten 361-368, PAJUNEN, E. ET AL. 'Immobilised yeast reactor application in continuous secondary fermentation in industrial scale operation.'

## Beschreibung

Die Erfindung betrifft ein Verfahren zur kontinuierlichen Herstellung von Bier, bei dem die Würze mit einem Sauerstoffgehalt von 0,5 bis 3,0 mg O₂ pro Liter mindestens einem als Schlaufenreaktor gestalteten Gärfermenter kontinuierlich zugeführt wird, der bei einer Temperatur von 6 bis 25°C sowie einem Druck von 1,5 bis 2 bar arbeitet, in dem die Würze eine mittlere Verweilzeit von 4 bis 40 Stunden hat, in dem sich ein Biokatalysator befindet, der eine biologisch aktive Hefe enthält und in dem ein Teilstrom der Würze ständig im Kreislauf geführt wird, wobei aus dem im Kreislauf geführten Teilstrom der Würze die freien Hefezellen abgetrennt werden und der enthefte Teilstrom dann während 0,5 bis 30 Minuten auf 60 bis 90°C erhitzt sowie anschließend abgekühlt wird, bevor er erneut in den Gärfermenter gelangt.

Aus der DE-PS 42 44 595 ist ein Verfahren zur kontinuierlichen Herstellung von Bier bekannt, bei dem stärkehaltige Rohstoffe mit Wasser eingemaischt und die Maische mindestens einem Reaktor kontinuierlich zugeführt wird, wobei die Temperatur der Maische vor Eintritt in die einzelnen Reaktoren durch indirekten Wärmeaustausch stufenweise auf eine Endtemperatur von 75 bis 85°C angehoben wird, wobei die Verweilzeit in den Reaktoren 30 bis 90 Minuten beträgt und wobei die Maische in den einzelnen Reaktoren auf einem definierten Temperaturniveau gehalten wird, bei dem der Treber aus der Maische in einem Dekanter kontinuierlich abgetrennt und anschließend mit dem Brauwasser in einem zweistufigen Dekanter ausgelaugt wird, bei dem die heiße Würze mit Hopfen oder Hopfenextrakt gemischt sowie kontinuierlich einem Durchflußreaktor zugeführt und auf eine Temperatur von 105 bis 140°C erhitzt wird sowie während der Durchgangszeit durch den Reaktor von 2 bis 60 Minuten auf dieser Temperatur und einem Druck von 1,2 bis 3,6 bar gehalten wird, bei dem die unter Druck stehende Würze einer Entspannungsverdampfung unterworfen, in einem Separator kontinuierlich von den Trubstoffen befreit und anschließend in einem Wärmeaustauscher auf die Vergärungstemperatur abgekühlt wird, bei dem die abgekühlte Würze mit einem Sauerstoffgehalt von 0,5 bis 3,0 mg O₂ pro Liter mindestens einem als Schlaufenreaktor gestalteten Fermenter kontinuierlich zugeführt wird, der bei einer Temperatur von 6 bis 25°C sowie einem Druck von 1,5 bis 2 bar arbeitet, in dem die Würze eine mittlere Verweilzeit von 10 bis 40 Stunden hat sowie ständig im Kreislauf geführt wird und in dem sich ein Biokatalysator befindet, der eine biologisch aktive Hefe enthält, bei dem während der Gärung kontinuierlich flüssiges Medium aus dem Fermenter abgezogen und zur Entfernung der sich darin befindlichen freien Hefezellen zentrifugiert wird und bei dem das enthefte flüssige Medium während 0,5 bis 30 Minuten auf 60 bis 90°C erhitzt sowie anschließend abgekühlt und entspannt wird, wobei ein Teilstrom in den Fermenter zurückgeführt und der zweite Teilstrom nach einer Filtration als Fertigprodukt abgegeben wird.

Bei der Durchführung dieses Verfahrens hat sich in einigen Fällen gezeigt, daß die geschmackliche Qualität des Biers noch verbessert werden muß, was darauf zurückgeführt wird, daß die Abtrennung des durch thermische Umwandlung von α-Acetolactat gebildeten Diacetyls durch die nach dem bekannten Verfahren vorgesehene Wärmebehandlung, Entspannung und teilweise Rückführung des Fertigprodukts in die Gärung nicht in jedem Fall nahezu quantitativ erreicht werden kann. Das Ziel der vorliegenden Erfindung ist also die Verbesserung der geschmacklichen Qualität von kontinuierlich hergestellten Bieren, insbesondere durch Senkung ihres Diacetyl-Gehalts.

Eine Geschmacksverbesserung durch Umwandlung von den bei der Primärgärung gebildeten Nebenprodukten erfolgt üblicherweise bei der als Reifung bezeichneten Lagerung des Jungbieres, die während einiger Wochen bei niedrigen Temperaturen durchgeführt wird. Eine solche Lagerung erfordert entsprechende Lagerräume und Vorratshaltung. Es wurden daher bereits Versuche zur Schnellreifung von Bier unternommen. So ist aus der DE-PS 41 37 474 ein Verfahren zur kontinuierlichen Schnellreifung von Bier durch weitere Umsetzung der im Primärfermentationsschritt behandelten Würze mit geträgerter Hefe bekannt, bei dem die Umsetzung im Wirbelschichtreaktor mit an weitporigem Granulat einer Porosität von 40 bis 65 % mit Porengrößen von 60 bis 300 µm und mit einer Teilchengröße von ≤ 3 mm immobilisierter Hefe bei erhöhtem Druck durchgeführt wird, wobei als Träger weitporiges Glasgranulat mit 1 bis 2 mm Teilchengröße verwendet und bei Temperaturen von 2 bis 10°C sowie Verweilzeiten von 5 bis 15 Stunden gearbeitet wird. Ferner ist aus der DE-PS 24 29 574 ein Verfahren zur kontinuierlichen Herstellung von Bier mit einer Vergärung der Bierwürze im Durchfluß in einer Gärapparatur bekannt, bei dem die Würze durch einen Gärturm geleitet wird, der Hefe enthält, die sich auf einem aus Diatomeen oder granulatförmigem Polyvinylchlorid bestehenden Träger befindet, bei dem das vom Gärturm kommende Jungbier durch einen Lagerturm geleitet wird, der entsprechend dem Gärturm einen hefehaltigen Träger aufweist und bei dem das vom Lagerturm kommende Bier durch einen Behandlungsturm geleitet wird, der Proteasen an einem Träger aus organischen Polymeren, Ziegeln, Kieselerde, Glas, Sand, Verbindungen auf Kieselerdebasis oder tonhaltigen Substanzen aufweist.

Der vorliegenden Erfindung liegt die Aufgabe zugrunde, ein Verfahren zur kontinuierlichen Herstellung von Bier zu schaffen, das die eingangs genannten Merkmale aufweist und mit dem über einen langen Zeitraum ein gereiftes Bier hergestellt werden kann, das eine gleichbleibend hohe geschmackliche Qualität besitzt und dessen Diacetyl-Gehalt immer unter 0,1 mg pro Liter, vorzugsweise unter 0,05 mg pro Liter, liegt.

Die der Erfindung zugrundeliegende Aufgabe wird dadurch gelöst, daß der gesamte Ablauf des Gärfermenters kontinuierlich in einen als Schlaufenreaktor gestalteten Reifefermenter geführt wird, in den außerdem 1 bis 8 % der dem Gärfermenter zugeführten Würze kontinuierlich eingebracht werden, der bei einer Temperatur von 10 bis 20°C arbeitet, in dem das zu reifende Medium eine mittlere Verweilzeit von 4 bis 30 Stunden hat, der mit dem Biokatalysator betrieben wird, der im Gärfermenter zum Einsatz kommt und in dem ein Teilstrom des zu reifenden Mediums ständig im Kreislauf geführt wird, wobei aus dem im Kreislauf geführten Teilstrom des zu reifenden Mediums die freien Hefezellen abgetrennt werden und der enthefte Teilstrom dann während 0,5 bis 30 Minuten auf 60 bis 70°C erhitzt sowie anschließend abgekühlt wird, bevor er erneut in den Reifefermenter gelangt und daß der gesamte Ablauf des Reifefermenters filtriert sowie als Fertigprodukt abgegeben wird. Durch die nach der Erfindung vorgesehene Trennung von Gärung und Reifung sowie durch die Zugabe von 1 bis 8 % der dem Gärfermenter zugeführten unvergorenen Würze in den Reifefermenter wird der Reifevorgang in vorteilhafter Weise so beeinflußt, daß im Regelfall ein Diacetyl-Gehalt von < 0,05 mg pro Liter im Fertigprodukt resultiert, wobei der Diacetyl-Gehalt im Fertigprodukt über einen längeren Zeitraum weitgehend konstant ist und nur in Ausnahmefällen den Diacetyl-Grenzwert von 0,1 mg pro Liter erreicht. Dieses Verfahrensergebnis kann im Dauerbetrieb zuverlässig eingehalten werden.

In weiterer Ausgestaltung der Erfindung ist vorgesehen, daß der gesamte Ablauf des Gärfermenters dem Teilstrom des zu reifenden Mediums des Reifefermenters zugemischt wird, bevor dieser Teilstrom entheft und erhitzt wird. Hierdurch wird also die Enthefung des Ablaufs des Gärfermenters mit der Enthefung des im Kreislauf geführten Teilstroms des Reifefermenters kostengünstig verbunden.

In weiterer Ausgestaltung der Erfindung ist ferner vorgesehen, daß zwei Gärfermenter eingesetzt werden, wobei dem ersten Gärfermenter 75 bis 90 % und dem zweiten Gärfermenter 5 bis 20 % der Würze zugeführt werden. Der Gärprozeß wird durch diese Verfahrensführung dahingehend vorteilhaft beeinflußt, daß der in den Reifefermenter geführte Ablauf des zweiten Gärfermenters bereits einen relativ niedrigen Diacetyl-Gehalt aufweist. Bei der erfindungsgemäßen Aufteilung der Würze auf den ersten und zweiten Gärfermenter ist zu beachten, daß 1 bis 8 % der gesamten zu vergärenden Würze in jedem Fall in den Reifefermenter eingebracht werden.

Schließlich ist in weiterer Ausgestaltung der Erfindung vorgesehen, daß der Biokatalysator einen TiO₂-Gehalt von 5 bis 30 Gew.-% aufweist sowie eine biologisch aktive Hefe und eine gelartige Matrix enthält, wobei die TiO₂-Teilchen einen Durchmesser von 0,1 bis 1 µm haben und der Katalysator kugelförmig ist. Dieser Katalysator ist in der DE-PS 37 04 478 beschrieben, und er hat den Vorteil, daß er gleichmäßig im Wirbelbett der Fermenter verteilt werden kann, gute mechanische Festigkeitseigenschaften besitzt und lediglich Substanzen enthält, die natürlichen Ursprungs sind bzw. die sich in chemischen bzw. biologischen Reaktionssystemen inert verhalten. Der Biokatalysator ist besonders gut auch zur Durchführung des kontinuierlichen Reifeprozesses geeignet.

Nach der Erfindung hat es sich als besonders vorteilhaft erwiesen, wenn die dem Reifefermenter zugeführte Würze einen Sauerstoffgehalt von 0,5 bis 3 mg O₂ pro Liter hat, da der Biokatalysator bei diesem Sauerstoffgehalt bezüglich der Hefe dauerhaft in einem optimalen Ernährungszustand gehalten wird und die bei der Reifung anwesende Würze nahezu quantitativ vergärt sowie den Diacetyl-Gehalt auf den erwünschten niedrigen Wert sicher absenkt.

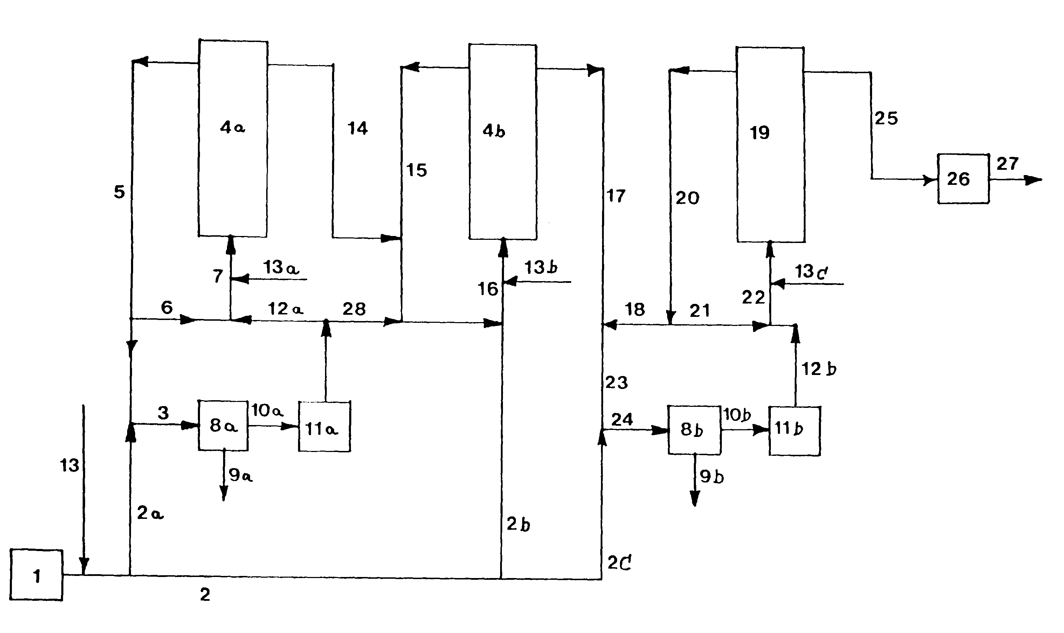

Der Gegenstand der Erfindung wird nachfolgend anhand der Zeichnung näher erläutert.

Im Vorratstank (1) befindet sich die gehopfte, gekochte, vergärungsfähige Würze, die keine Trubstoffe enthält und entkeimt ist. Die Würze wird mit einer Temperatur von ca. 15°C aus dem Vorratstank (1) kontinuierlich in die Hauptleitung (2) gefördert, wo sie zunächst mit der in der Leitung (13) geführten Luft gemischt wird, so daß sie einen Sauerstoffgehalt von 1,5 bis 1,7 mg O₂/l Würze hat und wo sie anschließend in drei Teilströme aufgeteilt wird, die über die Leitungen (2a), (2b) und (2c) abfließen. Der in der Leitung (2) geführte 0₂-haltige Würze-Strom (100 %) gelangt zu 80 % in die Leitung (2a), zu 15 % in die Leitung (2b) und zu 5 % in die Leitung (2c).

Aus der Leitung (2a) wird die Würze kontinuierlich in die Leitung (3) gefördert, wo sie mit einem Teilstrom des Substrats vermischt wird, das aus dem ersten Gärfermenter (4a) teilweise über die Leitung (5) abfließt. Der zweite Teilstrom des in der Leitung (5) fließenden Substrats gelangt über die Leitungen (6) und (7) in den Fermenter (4a), so daß ein interner Kreislauf im ersten Gärungsfermenter (4a) aufrechterhalten wird. Das Gemisch, welches aus Würze und einem Teilstrom des Substrats des ersten Gärfermenters (4a) besteht, wird über die Leitung (3) in den Separator (8a) gefördert, in dem die freien Hefezellen abgetrennt werden, die im Substrat des ersten Gärfermenters (4a) enthalten sind. Die Hefezellen werden aus dem Separator (8a) über die Leitung (9a) ausgetragen, während das enthefte Gemisch einer Wärmebehandlungseinheit (11a) über die Leitung (10a) zugeführt wird. Die Wärmebehandlungseinheit (11a) besteht aus einem Kurzzeiterhitzer, in dem das enthefte Gemisch auf eine Temperatur von ca. 65°C erhitzt wird, aus einer Heißhaltevorrichtung, in der das erhitzte Gemisch ca. 30 Minuten bei der Temperatur von 65°C gehalten wird, und aus einem Wärmeaustauscher, in dem das Gemisch auf die Gärtemperatur von ca. 15°C abgekühlt wird. Im Separator (8a) und in der Wärmebehandlungseinheit (11a) kommt es nicht zu Sauerstoffverlusten durch Austritt von Sauerstoff aus dem System in die Atmosphäre. Das abgekühlte Gemisch gelangt über die Leitung (12a) in die Leitung (7), wo es mit dem zweiten, in der Leitung (6) geführten Teilstrom des Substrats des ersten Gärfermenters (4a) gemischt wird. In die Leitung (7) mündet die Leitung (13a), über die Luft im Bedarfsfall nachdosiert werden kann.

Das aus der Leitung (7) in den ersten Gärfermenter (4a) eintretende zu vergärende Medium hat in diesem Fermenter eine mittlere Verweilzeit von 5 Stunden. Die Temperatur liegt im ersten Gärfermenter (4a) bei einem nahezu konstanten Wert von 15°C.

Das teilvergorene Medium fließt aus dem ersten Gärfermenter (4a) über die Leitung (14) ab und wird dem Substrat des zweiten Gärfermenters (4b) zugemischt, das über die Leitungen (15) und (16) teilweise in den zweiten Gärfermenter (4b) zurückfließt, so daß auch im zweiten Gärfermenter (4b) ein interner Substratkreislauf aufrechterhalten wird. Der in der Leitung (2b) geführte zweite Teilstrom der Würze wird mit dem in der Leitung (15) im Kreislauf geführten Substrat des zweiten Gärfermenters (4b) in der Leitung (16) gemischt, in die auch die Leitung (13b) mündet, über die im Bedarfsfall Luft nachdosiert werden kann. Im zweiten Gärfermenter (4b) hat das zu vergärende Medium eine mittlere Verweilzeit von 5 Stunden. Das vergorene Substrat verläßt den zweiten Gärfermenter (4b) über die Leitung (17).

Dem in der Leitung (17) geführten vergorenen Medium wird über die Leitung (18) ein Teilstrom des Substrats des Reifefermenters (19) zugemischt, das teilweise in der Leitung (20) fließt. Der zweite Teilstrom des in der Leitung (20) geführten Substrats gelangt über die Leitungen (21) und (22) erneut in den Reifefermenter (19), so daß auch im Reifefermenter (19) ein interner Kreislauf des Substrats aufrechterhalten wird. Das aus dem vergorenen Medium sowie aus dem ersten Teilstrom des Substrats des Reifefermenters (19) bestehende Gemisch wird über die Leitung (23) in die Leitung (24) gefördert, in die auch der dritte Teilstrom der Würze aus der Leitung (2c) eingebracht wird. Die aus dem vergorenen Medium, dem dritten Teilstrom der Würze und dem ersten Teilstrom des Substrats des Reifefermenters (19) bestehende Mischung wird aus der Leitung (24) in den Separator (8b) gefördert, wo die freien Hefezellen abgeschieden werden, die im vergorenen Medium und im ersten Teilstrom des Substrats des Reifefermenters (19) enthalten sind. Die freien Hefezellen werden über die Leitung (9b) aus dem Separator (8b) ausgetragen und können mit den in der Leitung (9a) ausgetragenen Hefezellen vereinigt und aus dem Verfahren ausgeschleust werden. Die enthefte Mischung gelangt über die Leitung (10b) in die Wärmebehandlungseinheit (11b), die entsprechend der Wärmebehandlungseinheit (11a) aus einem Kurzzeiterhitzer, einer Heißhaltevorrichtung und einem Wärmeaustauscher besteht, wobei die Mischung im Kurzzeiterhitzer auf 65°C erhitzt und in der Heißhaltevorrichtung während 30 Minuten bei dieser Temperatur gehalten wird und wobei im Wärmeaustauscher die Abkühlung der Mischung auf die Reifetemperatur von ca. 12°C erfolgt. Die abgekühlte Mischung wird über die Leitung (12b) in die Leitung (22) gefördert, wo eine Vermischung mit dem zweiten Teilstrom des im Kreislauf geführten Substrats des Reifefermenters (19) erfolgt. Das in der Leitung (22) geführte, zu reifende Medium kann im Bedarfsfall mit Luft gemischt werden, die über die Leitung (13c) in die Leitung (22) eingebracht wird. Das in der Leitung (22) geführte zu reifende Medium hat im Reifefermenter (19) eine mittlere Verweilzeit von 5 Stunden, wobei die Reifetemperatur bei ca. 12°C liegt.

Das gereifte Medium fließt über die Leitung (25) aus dem Reifefermenter kontinuierlich ab und gelangt in das Filter (26), das mit einem bekannten Filtrationshilfsmittel arbeitet und in dem die restlichen freien Hefezellen abgeschieden werden. Das Fertigprodukt fließt über die Leitung (27) kontinuierlich ab.

Wenn sich im Vorratstank (1) noch Kühltrub abscheidet, wird dieser zum überwiegenden Teil in den Separatoren (8a) und (8b) zusammen mit den freien Hefezellen abgeschieden. Sollte es notwendig sein, daß auch noch Kühltrub aus dem zweiten Teilstrom der Würze abgeschieden wird, kann dies in der Weise erfolgen, daß die Leitung (2b) geschlossen und der erste sowie der zweite Teilstrom der Würze gemeinsam über die Leitungen (2a) und (3) in den Separator (8a) geführt werden und daß ein Teilstrom des in der Leitung (12a) geführten Gemischs über die Leitung (28) in die Leitung (15) eingebracht wird, wobei sicherzustellen ist, daß dem zweiten Gärfermenter (4b) die erforderliche Menge Würze zugeführt wird; der in der Leitung (28) geführte Teilstrom muß also im vorliegenden Fall so bemessen sein, daß er 15 % der gesamten Würze enthält.

## Patentansprüche

1. Verfahren zur kontinuierlichen Herstellung von Bier aus einer gekochten, vergärungsfähigen Würze mit einem Sauerstoffgehalt von 0,5 bis 3 mg O₂/l in mindestens einem Gärfermenter (4a, 4b) und einem Reifefermenter (19), wobei jeder Fermenter (4a, 4b, 19) als Schlaufenreaktor ausgestaltet ist, wobei man jedem Fermenter (4a, 4b, 19) jeweils einen Teilstrom (2a, 2b, 2c) der vergärungsfähigen Würze kontinuierlich zuführt, wobei man den gesamten Ablauf des ersten Gärfermenters (4a) kontinuierlich in den nächsten Fermenter (4b,19) leitet, wobei sich in jedem Fermenter (4a, 4b, 19) ein Biokatalysator befindet, der eine biologisch aktive Hefe enthält, wobei im ersten Gärfermenter (4a) eine Temperatur von 6 bis 25°C und ein Druck von 1,5 bis 2 bar herrscht und die Würze eine mittlere Verweilzeit von 4 bis 40 Stunden hat und wobei aus jedem Fermenter (4a, 4b, 19) ständig hefehaltige Flüssigkeit nach außen geführt und im Kreislauf in den Fermenter zurückgeführt wird,
dadurch gekennzeichnet, daß man einen ersten Teilstrom der hefehaltigen Flüssigkeit (5) aus dem ersten Gärfermenter (4a) durch einen ersten Separator (8a) leitet, in welchem man die freien Hefezellen abtrennt, daß man die enthefte Flüssigkeit aus dem ersten Separator einer ersten Wärmebehandlung (11a) unterzieht, wobei man die enthefte Flüssigkeit zunächst während 0,5 bis 30 Minuten auf 60 bis 90°C erhitzt, dann abkühlt und mindestens teilweise zum ersten Gärfermenter zurückführt,
daß man dem Reifefermenter (19) 1 bis 8 % der zu vergärenden Würze kontinuierlich zuführt (2c), daß man im Reifefermenter bei einer Temperatur von 10 bis 20°C und einer mittleren Verweilzeit von 4 bis 30 Stunden arbeitet, daß man einen Teilstrom der hefehaltigen Flüssigkeit (20) aus dem Reifefermenter (19) im Kreislauf zusammen mit dem vom vorherigen Gärfermenter (4a, 4b) kommenden Ablauf durch einen zweiten Separator (8b) leitet, in welchem man die freien Hefezellen abtrennt, daß man die enthefte Flüssigkeit aus dem zweiten Separator einer zweiten Wärmebehandlung (11b) unterzieht, wobei man die enthefte Flüssigkeit zunächst während 0,5 bis 30 Minuten auf 60 bis 70°C erhitzt, dann abkühlt und zum Reifefermenter zurückführt, und daß man das Endprodukt aus dem Reifefermenter abzieht und filtriert.

2. Verfahren nach Anspruch 1, dadurch gekennzeichnet, daß der erste Gärfermenter (4a), ein zweiter Gärfermenter (4b) und der Reifefermenter (19) in Serie geschaltet werden und daß man dem ersten Gärfermenter 75 bis 90 %, dem zweiten Gärfermenter 5 bis 20 % und dem Reifefermenter 1 bis 8 % der gekochten, vergärungsfähigen Würze zuführt.

## Claims

1. A method for the continuous production of beer from a boiled, fermentable wort having an oxygen content of 0.5 to 3 mg O₂/l in at least one fermentation fermenter (4a, 4b) and a maturation fermenter (19), each fermenter (4a, 4b, 19) being in the form of a loop reactor, wherein each fermenter (4a, 4b, 19) is continuously supplied with a partial stream (2a, 2b, 2c) of the fermentable wort, wherein the entire discharge from the first fermentation fermenter (4a) is passed continuously into the next fermenter (4b, 19), with a biocatalyst being located in each fermenter (4a, 4b, 19) which contains a biologically active yeast, with the temperature being from 6 to 25°C and the pressure being from 1.5 to 2 bar and the wort having an average dwell time of 4 to 40 hours in the first fermentation fermenter (4a) and wherein yeast-containing liquid is continuously carried out from each fermenter (4a, 4b, 19) and is recirculated into the fermenter,
characterised in that a first partial stream of the yeast-containing liquid (5) is passed out of the first fermentation fermenter (4a) through a first separator (8a), in which the free yeast cells are separated off, that the de-yeasted liquid from the first separator is subjected to a first heat treatment (11a), the de-yeasted liquid initially being heated to 60 to 90°C for 0.5 to 30 minutes, then cooled and at least partially returned to the first fermentation fermenter,
1 to 8% of the wort to be fermented is supplied continuously (2c) to the maturation fermenter (19), that in the maturation fermenter operation is at a temperature of 10 to 20°C and an average dwell time of 4 to 30 hours, that a partial stream of the yeast-containing liquid (20) from the maturation fermenter (19) is circulated, together with the discharge from the previous fermentation fermenter (4a, 4b), through a second separator (8b) in which the free yeast cells are separated off, that the de-yeasted liquid from the second separator is subjected to a second heat treatment (11b), the de-yeasted liquid initially being heated to 60 to 70°C for 0.5 to 30 minutes, then cooled and returned to the maturation fermenter, and that the end product is withdrawn from the maturation fermenter and filtered.

2. A method according to Claim 1, characterised in that the first fermentation fermenter (4a), a second fermentation fermenter (4b) and the maturation fermenter (19) are connected in series and that 75 to 90% of the boiled, fermentable wort is fed to the first fermentation fermenter, 5 to 20% to the second fermentation fermenter and 1 to 8% to the maturation fermenter.

## Revendications

1. Procédé permettant de produire en continu de la bière de moût cuit et fermentescible avec une teneur en oxygène de 0,5 à 3 mg d'O₂/l dans au moins un fermenteur de fermentation (4a, 4b) et un fermenteur de maturation (19), chaque fermenteur (4a, 4b, 19) étant formé comme colonne à bulles à écoulement en boucles, chaque fermenteur (4a, 4b, 19) étant à chaque fois alimenté en continu avec un courant partiel du moût fermentescible (2a, 2b, 2c), l'écoulement total du premier fermenteur de fermentation (4a) étant conduit en continu dans les fermenteurs suivants (4b, 19), un biocatalyseur, qui contient une levure biologiquement active, se trouvant dans chaque fermenteur (4a, 4b, 19), une température de 6 à 25°C et une pression de 1,5 à 2 bars régnant dans le premier fermenteur de fermentation (4a), et le moût a un temps de séjour moyen de 4 à 40 heures, et du liquide contenant de la levure étant en permanence mené de chaque fermenteur (4a, 4b, 19) vers l'extérieur et étant ramené en circuit dans le fermenteur,
caractérisé en ce que l'on conduit un premier courant partiel du liquide contenant de la levure (5) hors du premier fermenteur de fermentation (4a) à travers un premier séparateur (8a), dans lequel on sépare les cellules de levure libres, en ce que l'on soumet le liquide dégorgé hors du premier séparateur (8a) à un premier traitement thermique (11a), le liquide dégorgé étant d'abord chauffé pendant 0,5 à 30 minutes de 60 à 90°C et étant ensuite refroidi et ramené au moins partiellement dans le premier fermenteur de fermentation,
en ce que 1 à 8% du moût à fermenter (2c) alimente en continu le fermenteur de maturation (19), en ce que l'on travaille dans le fermenteur de maturation à une température de 10 à 20°C et avec un temps de séjour moyen de 4 à 30 heures, en ce que l'on conduit un courant partiel du liquide contenant de la levure (20) hors du fermenteur de maturation (19) en circuit avec l'écoulement venant du fermenteur de maturation (4a, 4b) précédent à travers un deuxième séparateur (8b), dans lequel on sépare les cellules de levure libres, en ce que l'on soumet le liquide dégorgé hors du deuxième séparateur à un deuxième traitement thermique (11b), le liquide dégorgé étant d'abord chauffé pendant 0,5 à 30 minutes de 60 à 70°C et ensuite refroidi et ramené au fermenteur de maturation, et en ce que l'on retire le produit final du fermenteur de maturation et on le filtre.

2. Procédé selon la revendication 1, caractérisé en ce que le premier fermenteur de fermentation (4a), un deuxième fermenteur de fermentation (4b) et le fermenteur de maturation (19) sont montés en série et en ce que le premier fermenteur de fermentation est alimenté par 75 à 90% du moût fermentescible cuit, le deuxième fermenteur de fermentation par 5 à 20% et le fermenteur de maturation par 1 à 8%.
